Europäisches Patentamt

European Patent Office

Office européen des brevets

(11) Publication number: **0 364 917**

**A1**

(12) # EUROPEAN PATENT APPLICATION

(21) Application number: **89119156.1**

(22) Date of filing: **16.10.89**

(51) Int. Cl.5: **F16L 37/08**

(30) Priority: **19.10.88 IT 2204288 U**

(43) Date of publication of application:
**25.04.90 Bulletin 90/17**

(84) Designated Contracting States:
**AT BE CH DE ES FR GB GR IT LI LU NL SE**

(71) Applicant: **AIGNEP S.n.c. di GHIDINI GUALTIERO & C.**
**Via Roma**
**I-25070 Bione (Brescia)(IT)**

(72) Inventor: **Prandelli, Gian Bortolo**
**Via Benacense 29**
**I-25100 Brescia(IT)**
Inventor: **Franzoni, Vittorio**
**Via San Giovanni Bosco 70**
**I-25067 Lumezzane Sant'Apollonio**
**Brescia(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Quick-connection device for pipes with different diameters.**

(57) This quick-connection device for connecting pipes with different diameters, characterized in that it comprises a sleeve (2) of elastically resilient material having a portion with longitudinal cuttings (3) adapted to create flexible wings (4) for locking the respectively outer and inner surfaces of the two pipes (8,11) to be connected. According to the invention, inside the rectilinear portion of the flexible wings (4), the device has at least one longitudinal ridge or raised portion (12) having a thickness substantially equal to the height of the narrowing shoulders (6) provided at the end of the rectilinear portion of said wings (4), said ridges (12) altogether being capable of keeping the smaller-diameter pipe (11) centered inside the connection during insertion, so that the ends of said pipe (11) does not jam against said shoulders (6), preventing or hindering the further advancement of the end of said pipe (11).

Fig. 3

# QUICK-CONNECTION DEVICE FOR PIPES WITH DIFFERENT DIAMETERS

The present invention relates to a quick-connection device for joining pipes with different diameters, improved so as to be easier and safer in use with respect to conventional connections.

As is known, quick connections for pipes are constituted by sleeves of metal or rigid plastic material shaped so as to have flexible arms or wings obtained by cuttings along the generatrices of the sleeve-like body and executed on a portion of the longitudinal extension of said sleeve.

These connections are used to quickly join the ends of pipes with different diameters, ensuring tightness to liquids or compressed gases. The joint is performed by inserting the end of the smaller-diameter pipe in the connection and by inserting the connection (containing said pipe) in the end of the larger-diameter pipe, which is conveniently tapered for this purpose so as to interact with the ends of the flexible wings of the connection; the outer pipe is thus locked on the flexible wings of the connection and said tapering forces said wings against the outer cylindrical surface of the smaller-diameter pipe inserted in the connection, thus ensuring the stable coupling of the two pipes.

In particular, connections executed in plastic material by molding have the advantage, with respect to metal ones, that they do not require further machining to produce the flexible wings, since said wings are produced during molding and that they have flexibility characteristics which are intrinsic to the plastic material itself. The wings can furthermore have a constant thickness for almost all of their length, thus ensuring greater mechanical resistance similarly, the opened-out ends of the wings are also obtained during molding without requiring subsequent machining, as is instead required in the case of metal connections.

A type of quick connection for pipes with different diameters offering the best advantages as regards practicality in use and assurances of tightness and mechanical resistance has already been protected by a patent application in the name of the same Applicants of the present Patent Application. Said patent bears the application no. 23243 B/86 and was filed on 9.30.1986. The connection described therein is entirely made of molded plastic material and also has means adapted to facilitate its practical application and to contain and protect the free end of the larger-diameter pipe against possible impacts which may cause axial slipping between the coupled pipes.

In practice, however, it has been observed that when the smaller-diameter pipe is inserted in the tubular connection the presence of the shoulders for narrowing the diameter of said connection provided at the ends of the rectilinear portion of the wings can cause difficulties in the advancement of the end of the smaller-diameter pipe since said end of the pipe tends to jam against said shoulders.

This disadvantage is more noticeable when the outer diameter of the smaller-diameter pipe is very proximate to the inner one of the connection, this being necessary in order to obtain a very stable and safely tight connection.

The aim of the present invention is to provide a quick connection of molded plastic material for pipes with different diameters, improved so as to avoid the disadvantage of the jamming of the end of the smaller-diameter pipe against the shoulders for narrowing the connection cross section, provided at the ends of the rectilinear portions of the flexible wings, during the insertion of the pipe into said connection.

An object of the invention is to provide a quick connection of the above described type wherein said improvement can be provided during the connection molding step and has such dimensions as to have no negative effect on the stability of the coupling of the pipes, on the tightness of the connection and on the overall manufacturing cost thereof.

This aim and this object, as well as others which will become apparent from the following description, are advantageously achieved by a quick-connection device for coupling pipes with different diameters, comprising a sleeve of molded plastics with a portion having cuttings adapted to create flexible wings for locking the respectively outer and inner surfaces of the ends of the pipes to be connected, said connection having, according to the present invention, at least one longitudinal raised portion or ridge inside the rectilinear portion of said flexible wings, said ridge having a thickness substantially equal to the height of the narrowing shoulders provided at the end of the rectilinear portion of said wings, said ridges altogether being capable of keeping the smaller-diameter pipe centered inside the connection during insertion so that the end of said pipe does not jam against said shoulders, preventing or hindering the further advancement of the end of said pipe.

According to a further characteristic of the invention, the thickness of said inner ridges protruding from the surface of the wings increases towards said shoulders, so as to create a reduced friction between the wings and the outer surface of the smaller-diameter pipe, and at the same time to be capable of preventing any jamming.

The invention is now described in greater detail according to a more advantageous and non-exclusive embodiment with reference to the accompanying drawing, given only by way of non-limitative example, wherein:

figure 1 is a lateral view of the device according to the invention with the conventional flange for protecting the end of the larger pipe in position ready to be snap fitted on the connection;

figure 2 is a front view, i.e. from the side with the flexible wings, of said connection of figure 1;

figure 3 is an exploded view of the various components of the connection and of the ends of the pipes to be connected, taken along the longitudinal section III-III of figure 2;

figure 4 is a partial longitudinal sectional view of the invention of figure 3, taken along the line IV-IV of figure 2 and illustrating the connection in the step preceding its final locking; and

figure 5 is a view of the connection of figure 4 in its position of stably locked coupling.

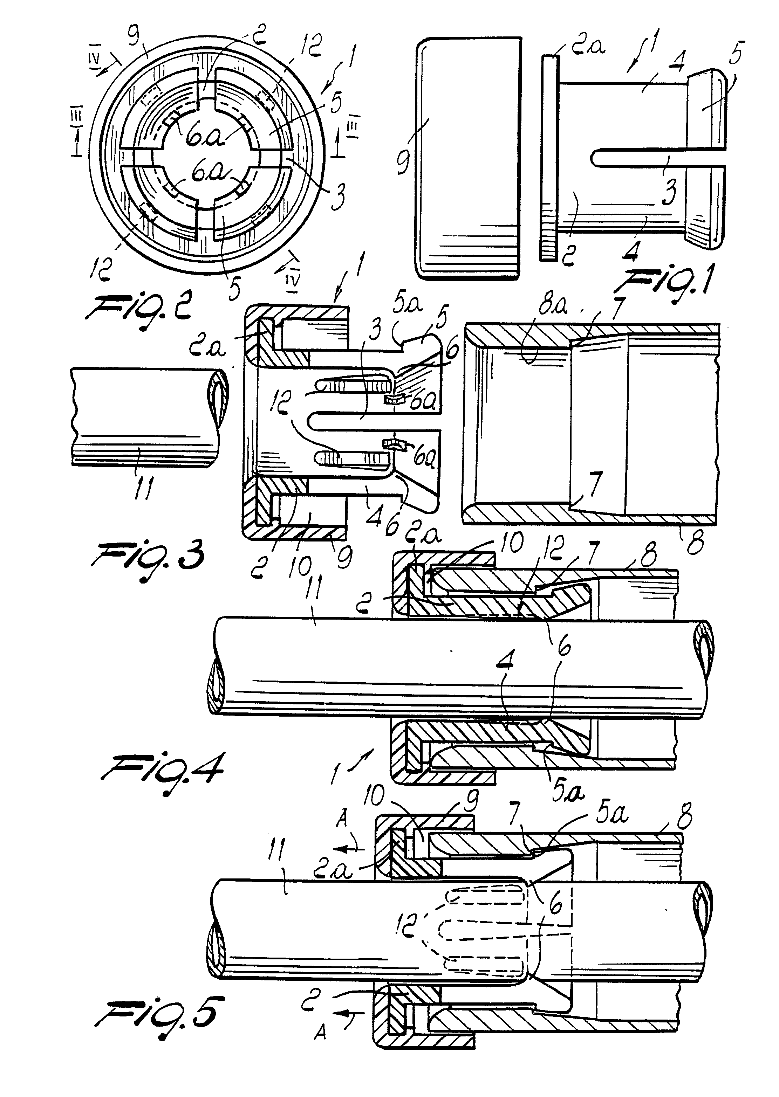

The above described figures illustrate a type of connection of flexible material the main components whereof have been the subject of the previously mentioned prior patent application in the name of the same Applicants, the improvement according to the present invention being performed to said connection.

Essentially, the coupling device according to the invention comprises a body, indicated as a whole by the reference numeral 1, of rigid plastic material obtained monolithically by molding.

The cited body 1 is made of polyamide 66 charged with 50% glass fibres having a length greater than 5mm. With this mixture, one obtains an optimum balance between the hardness of the glass fibres and the flexibility of the plastic material, thereby achieving excellent functional characteristics. Said body 1 comprises a cylindrical sleeve 2 having, at one end, an also cylindrical flange 2a and divided, for a portion of its length, by longitudinal cuttings 3 adapted to define a plurality of flexible wings 4 the ends whereof have an outwardly widened portion 5 and are internally provided with a curved shoulder 6; said shoulders altogether form a narrowing of the cross section of the cavity of the sleeve 2.

Advantageously, recesses 6a can be provided on the shoulders 6 to define teeth, adapted to improve the engagement with the pipe 11.

Each wing is furthermore externally provided on the widened portion 5, with a step 5a which in its final securing position engages against a shoulder 7 provided on the inner surface of the larger-diameter pipe 8.

The connection is completed by a cylindrical collar 9 insertable with snap action on the flange 2a of the sleeve and externally folded on itself so as to create a cylindrical interspace 10 for containing the end of the larger-diameter pipe 8 when the locking is complete.

The two pipes 11 and 8 are normally coupled by initially inserting the wings 4 in the end of the larger pipe 8, which is conveniently internally tapered as indicated by 8a in the figures, until said wings, by flexing towards one another, move beyond the tapered section 8a, moving their respective steps 5a to hook against the annular step 7 of the pipe 8 as an effect of their elasticity.

After inserting the sleeve 2 in the pipe 8, the smaller-diameter pipe 11 is inserted in the sleeve and into the pipe 8 (figures 4 and 5), and since the end of the pipe 11 tends to jam against the internal shoulders 6 of the wings during this insertion because said shoulders narrow the cross section of the sleeve, considerable effort is required to force the end of the pipe 11 to move beyond said shoulders; on the other hand it is the shoulders 6 that retain the pipe 11 when the locking is complete; in fact, when the insertion is complete, as in figure 4, it is necessary to pull the collar 9 and the entire sleeve backwards (according to the arrows A of figure 5) to allow the widened ends of the wings to adhere against the facing surfaces of the two pipes 8 and 11 until the step 7 of the outer pipe 8 mates with the outer steps 5a of the wings.

Therefore for avoiding the jamming of the end of the pipe 11 against the shoulders 6 inside the sleeve during the initial insertion step, the present invention comprises simple and safe means, as herein below described.

In fact, according to the invention a raised ridge 12 is provided on the inner curved surface of each wing 4 and is arranged longitudinally along a generatrix of the sleeve and its thickness is substantially equal to the height of the shoulders 6 at least in the terminal portion proximate to said shoulders.

Each ridge preferably has an increasing thickness towards the ends of the wings so as to reduce the friction between the pipe 11 and the ridges during insertion; it is sufficient that the end of the ridges be substantially equal in height or thickness to the height of the shoulders in order to avoid any jamming.

The use of said ridges therefore facilitates the coupling, said ridges constituting at the same time a reinforcement for the wings without depriving them of their necessary flexibility.

In the practical embodiment the materials employed and the dimensions of the various components may naturally vary according to the requirements without abandoning the scope of the protection of the invention.

Where technical features mentioned in any claim are followed by reference signs those reference signs have been included for the sole purpose of increasing the intelligibility of the claims and accordingly, such reference signs do not have any limiting effect on the scope of each element identified by way of example by such reference signs.

## Claims

1. A quick-connection device for connecting pipes with different diameters, characterized in that it comprises a sleeve (2) of elastically resilient material having a portion with cuttings (3) adapted to create flexible wings (4) for locking the respectively outer and inner surfaces of the two pipes (8-11) to be connected, characterized in that inside the rectilinear portion of said flexible wings (4), said sleeve (2) has at least one longitudinal ridge or raised portion (12) having a thickness substantially equal to the height of the narrowing shoulders (6) provided at the end of the rectilinear portion of said wings (4), said ridges (12) altogether being capable of keeping the smaller-diameter pipe centered inside the connection during insertion, so that the ends of said pipe does not jam against said shoulders (6), preventing or hindering the further advancement of the end of said pipe.

2. Connection device according to claim 1, characterized in that said sleeve (2) is made of polyamide 66 charged with 50% glass fibres having a length greater than 5mm.

3. Connection device according to the preceding claims, characterized in that it comprises recesses (6a) located on said shoulders (6) and being adapted to define teeth for engagement with said pipe (11).

4. A connection device according to claim 1, characterized in that said ridges (12) protruding from the inner surface of said wings (4) increase their thickness or height towards said narrowing shoulders (6) so as to create reduced friction between the wings (4) and the smaller-diameter pipe during the insertion of the latter in the sleeve (2) and at the same time avoid jammings against said shoulders (6).

EP 0 364 917 A1

**Fig.1**

**Fig.2**

**Fig.3**

**Fig.4**

**Fig.5**

| **DOCUMENTS CONSIDERED TO BE RELEVANT** | | | EP 89119156.1 |

| Category | Citation of document with indication, where appropriate, of relevant passages | Relevant to claim | CLASSIFICATION OF THE APPLICATION (Int. Cl.) 5 |
|---|---|---|---|
| A | DE - A1 - 2 534 956 (GUEST) * Totality * -- | 1 | F 16 L 37/08 |
| A | FR - A2 - 2 582 771 (SOCIETE DES FLEXIBLES ANOFLEX) * Totality * ---- | 1 | |
| | | | TECHNICAL FIELDS SEARCHED (Int. Cl.) 5 |
| | | | F 16 L 37/00 |

The present search report has been drawn up for all claims

| Place of search | Date of completion of the search | Examiner |
|---|---|---|
| VIENNA | 05-12-1989 | SCHUGANICH |